# EUROPÄISCHE PATENTSCHRIFT

(11) **EP 3 310 631 B1**
(45) Veröffentlichungstag und Bekanntmachung des Hinweises auf die Patenterteilung: **10.07.2019**
(21) Anmeldenummer: 16718373.0
(22) Anmeldetag: 26.04.2016
(51) Int. Cl.: B60T 17/22, B60T 13/74, F16D 65/28, F16D 65/14

(54) **FESTSTELLBREMSE IN EINEM FAHRZEUG**
PARKING BRAKE IN A VEHICLE
FREIN DE STATIONNEMENT POUR VEHICULE

(30) Priorität: 22.06.2015 DE 102015211409
(43) Veröffentlichungstag der Anmeldung: 25.04.2018
(73) Patentinhaber: Robert Bosch GmbH, 70442 Stuttgart (DE)
(72) Erfinder: WOLFF, Helmut, 74199 Untergruppenbach (DE); HAUBER, Simon, 71691 Freiberg am Neckar (DE)
(86) Internationale Anmeldenummer: PCT/EP2016/059243
(87) Internationale Veröffentlichungsnummer: WO 2016/206833

(56) Entgegenhaltungen:
- EP-A1- 1 650 463
- WO-A1-2009/053429
- DE-A1-102005 022 400
- DE-A1-102006 052 810
- DE-A1-102008 055 632
- DE-A1-102010 024 590
- DE-A1-102011 005 842
- DE-A1-102012 206 223
- DE-A1-102013 005 744

## Beschreibung

Die Erfindung bezieht sich auf eine Feststellbremse in einem Fahrzeug nach dem Oberbegriff des Anspruches 1.

### Stand der Technik

In der DE 103 61 042 B3 wird eine Feststell- bzw. Parkbremse in einem Fahrzeug beschrieben, mit der eine das Fahrzeug im Stillstand festsetzende Klemmkraft erzeugt werden kann. Die elektromechanisch ausgeführte Feststellbremse umfasst einen elektrischen Bremsmotor, der einen Bremskolben, welcher Träger eines Bremsbelages ist, axial in Richtung auf eine Bremsscheibe verstellt.

Eine elektromechanische Bremsvorrichtung, die als Parkbremse eingesetzt wird, wird auch in der DE 10 2006 052 810 A1 beschrieben. Die Antriebsbewegung des elektrischen Bremsmotors wird über ein Getriebe auf die Spindel und weiter auf den Bremskolben übertragen.

Die verschiedenen Komponenten der elektromechanischen Bremsvorrichtung weisen üblicherweise eine Temperaturabhängigkeit auf. Beispielsweise fällt die Motorkonstante des elektrischen Bremsmotors, von der die bereitgestellte Klemmkraft abhängt, mit zunehmender Temperatur ab. Auch das Getriebe und die Spindel weisen eine Temperaturabhängigkeit auf, wobei aufgrund der kinematischen Wirkkette von Bremsmotor, Getriebe und Spindel der Gesamtwirkungsgrad sich aus einer Verkettung der Einzelwirkungsgrade zusammensetzt und dementsprechend eine erhöhte Abhängigkeit von der Temperatur aufweist.

### Offenbarung der Erfindung

Die erfindungsgemäße Feststellbremse wird vorzugsweise zum Erzeugen einer das Fahrzeug im Stillstand festsetzenden Klemmkraft genutzt. Die Feststellbremse umfasst eine elektromechanische Bremsvorrichtung mit einem elektrischen Bremsmotor, dessen Antriebsbewegung über ein Getriebe auf einen Bremskolben übertragbar ist. Der Bremskolben drückt einen Bremsbelag gegen eine Bremsscheibe, wodurch die Klemmkraft erzeugt wird. Bei einer Betätigung des elektrischen Bremsmotors wird die Rotationsbewegung des Rotors des Bremsmotors in eine axiale Stellbewegung einer Spindel umgesetzt, über die der Bremskolben mit dem Bremsbelag axial gegen die Bremsscheibe beaufschlagt wird. Bei dem Bremskolben handelt es sich vorzugsweise um den Bremskolben der hydraulischen Fahrzeugbremse, der durch den hydraulischen Bremsdruck gegen die Bremsscheibe gepresst wird.

Die Feststellbremse ist mit einer temperaturkompensierenden Motor-Getriebe-Einheit versehen, die den elektrischen Bremsmotor und das Getriebe umfasst, über die die Antriebsbewegung des Bremsmotors auf die Spindel übertragen wird. Mittels der Temperaturkompensation wird ein temperaturunabhängiger Gesamtwirkungsgrad in der elektromechanischen Bremsvorrichtung erreicht, so dass unabhängig von der aktuellen Temperatur in der Bremsvorrichtung immer ein zumindest annähernd gleicher Gesamtwirkungsgrad herrscht. Dies hat den Vorteil, dass die Klemmkraft, welche in der elektromechanischen Bremsvorrichtung erzeugt wird, in einfacherer und genauerer Weise bestimmt werden kann. Die Klemmkraft kann mit hinreichender Näherung durch Multiplikation des Gesamtwirkungsgrades mit dem aktuellen Motorstrom und mit dem resultierenden Radius der Getriebe-Spindel-Untersetzung zum Umrechnen des Motormoments ausgedrückt werden. Es ist insbesondere nicht mehr erforderlich, für die Klemmkraftermittlung die temperaturabhängige Motorkonstante des Bremsmotors zu bestimmen.

Bei der erfindungsgemäßen Feststellbremse ist das Getriebe in der Weise ausgelegt, dass der Getriebewirkungsgrad mit zunehmender Temperatur in der Motor-Getriebe-Einheit stetig ansteigt. Der stetige Anstieg des Getriebewirkungsgrades kompensiert hierbei den stetigen Abfall der temperaturabhängigen Motorkonstanten sowie den stetigen Abfall des temperaturabhängigen Spindelwirkungsgrades. Der stetige Anstieg des Getriebewirkungsgrades ist groß genug, um das Abfallen der Motorkonstanten und auch des Spindelwirkungsgrades mit zunehmender Temperatur auszugleichen. Im Ergebnis ergibt sich hierdurch ein Gesamtwirkungsgrad, der für alle auftretenden Temperaturen zumindest annähernd konstant ist.

Der stetige Anstieg des Getriebewirkungsgrades wird vorzugsweise dadurch erreicht, dass bei niedrigeren Temperaturen eine Verschlechterung des Getriebewirkungsgrades eingestellt und in Kauf genommen wird, wobei mit zunehmender Temperatur der Getriebewirkungsgrad sich demjenigen Wirkungsgrad annähert, der ohne die wirkungsgradändernden Maßnahmen in dem Getriebe herrschen würde. Bei aus dem Stand der Technik bekannten Getrieben steigt zunächst der Wirkungsgrad bei tiefen Temperaturen an und fällt anschließend wieder ab, wobei der abfallende Ast des Getriebewirkungsgrades mit der abfallenden Motorkonstanten und dem abfallenden Spindelwirkungsgrad zusammenfällt. Bei der erfindungsgemäßen Ausführung kann dagegen bei niedrigen Temperaturen eine bewusste Wirkungsgradverschlechterung im Getriebe in Kauf genommen werden, so dass zwar bei niedrigen Temperaturen ein schlechterer Getriebewirkungsgrad als bei Ausführungen im Stand der Technik vorliegt, jedoch mit zunehmender Temperatur eine stetig ansteigende Wirkungsgradkurve erreicht wird.

Der temperaturabhängige stetige Anstieg des Getriebewirkungsgrades soll sowohl monoton steigende als auch streng monoton steigende Wirkungsgradkurven umfassen. Bei monoton steigenden Kurven sind steigungsfreie Abschnitte mit konstant bleibendem Wirkungsgrad zugelassen, wobei insgesamt über den betrachtenden Temperaturbereich ein Anstieg des Getriebewirkungsgrades gegeben ist. Bei streng monoton steigenden Kurven weisen diese dagegen einen kontinuierlichen Anstieg auf.

Es kommen sowohl lineare als auch nicht-lineare Anstiege in Betracht. Vorteilhaft ist es, einen linearen Anstieg des Getriebewirkungsgrades vorzusehen, über den ein linearer Abfall der Motorkonstanten und ein linearer Abfall des Spindelwirkungsgrades kompensiert wird.

Gemäß einer zweckmäßigen Ausführung weist mindestens ein Getriebebauteil bei tieferen Temperaturen eine höhere Steifigkeit auf. Dementsprechend besitzt dieses Getriebebauteil bei höheren Temperaturen eine geringere Steifigkeit. Bei dem Getriebebauteil handelt es sich beispielsweise um einen Antriebsriemen, über den insbesondere eine Motorwelle des elektrischen Bremsmotors mit einer Getriebewelle des Getriebes gekoppelt wird. Aufgrund der höheren Steifigkeit bei tieferen Temperaturen muss Verformungsarbeit für die Verformung des Antriebsriemens geleistet werden, wodurch sich bei den tiefen Temperaturen der Getriebewirkungsgrad verschlechtert. Bei höheren Temperaturen, gegebenenfalls mit dem Überschreiten einer Grenztemperatur, verringert sich die Steifigkeit des Getriebebauteils, so dass entsprechend weniger Verformungsarbeit aufgebracht werden muss, was den Getriebewirkungsgrad verbessert. Dementsprechend stellt sich mit zunehmender Temperatur ein stetig ansteigender Getriebewirkungsgrad ein.

Der Antriebsriemen ist vorzugsweise als ein Zahnriemen ausgeführt und besteht beispielsweise aus Polyurethan. Der Antriebsriemen kann einen Elastizitätsmodul zwischen 10 N/mm² und 24 N/mm² aufweisen.

Das Getriebebauteil weist die höhere Steifigkeit bevorzugt in einem negativen Temperaturbereich auf, zum Beispiel zwischen -40° C und 0° C. Mit dem Überschreiten des Gefrierpunktes weist das Getriebebauteil vorteilhafterweise eine geringere Steifigkeit auf. Der positive Temperaturbereich, in welchem das Getriebe typischerweise eingesetzt wird, erstreckt sich beispielsweise bis 90° oder 105°.

Die Steifigkeit des Getriebebauteils kann sich temperaturabhängig kontinuierlich ändern oder aber, in alternativer Ausführung, Steifigkeitssprünge aufweisen, insbesondere im Bereich des Gefrierpunktes.

Der über der Temperatur stetige Anstieg des Getriebewirkungsgrades kann zusätzlich oder alternativ auch über ein entsprechendes Schmieröl im Getriebe erreicht bzw. unterstützt werden. Das Schmieröl weist bei hohen Temperaturen, insbesondere bei Temperaturen im positiven Bereich eine optimierte Schmierung auf. Auch in diesem Fall kommt eine kontinuierliche Verbesserung der Schmierung oder eine sprunghafte Verbesserung bei ansteigender Temperatur in Betracht.

Zusätzlich oder alternativ zu dem Antriebsriemen, der Bestandteil des Getriebes ist, kann auch ein weiteres Getriebebauteil bei tieferen Temperaturen eine höhere Steifigkeit aufweisen. Des Weiteren kommen auch Getriebe ohne Antriebsriemen in Betracht, wobei auch in diesem Fall ein Getriebebauteil vorteilhafterweise bei tieferen Temperaturen eine höhere Steifigkeit aufweist.

Weitere Vorteile und zweckmäßige Ausführungen sind den weiteren Ansprüchen, der Figurengeschreibung und den Zeichnungen zu entnehmen. Es zeigen:
- Fig. 1: einen Schnitt durch eine elektromechanische Bremsvorrichtung für ein Fahrzeug, bei der Bremskraft über einen elektrischen Bremsmotor erzeugt wird,
- Fig. 2: ein Schaubild mit dem Verlauf des Getriebewirkungsgrades in Abhängigkeit von der Temperatur.

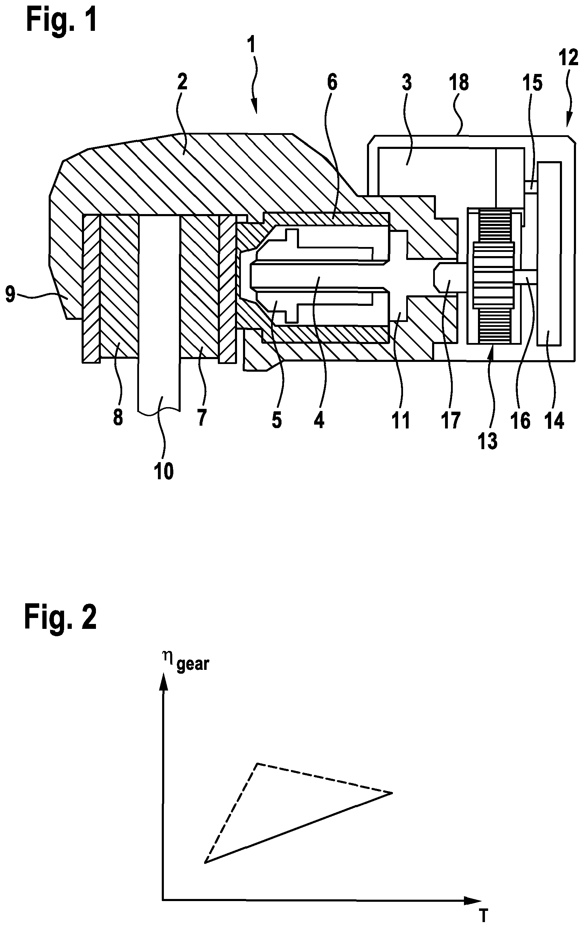

Die in Fig. 1 dargestellte elektromechanische Bremsvorrichtung 1 umfasst einen Bremssattel 2 mit einer Zange 9, welche eine Bremsscheibe 10 übergreift. Als Stellglied weist die Bremsvorrichtung 1, die als Feststell- bzw. Parkbremse eingesetzt werden kann, einen Gleichstrom-Elektromotor als Bremsmotor 3 auf, dessen Rotorwelle eine Spindel 4 rotierend antreibt, auf der eine Spindelmutter 5 drehbar gelagert ist. Bei einer Rotation der Spindel 4 wird die Spindelmutter 5 axial verstellt. Die Spindelmutter 5 bewegt sich innerhalb eines Bremskolbens 6, der Träger eines Bremsbelags 7 ist, welcher von dem Bremskolben 6 gegen die Bremsscheibe 10 gedrückt wird. Auf der gegenüberliegenden Seite der Bremsscheibe 10 befindet sich ein weiterer Bremsbelag 8, der ortsfest an der Zange 9 gehalten ist.

Innerhalb des Bremskolbens 6 kann sich die Spindelmutter 5 bei einer Drehbewegung der Spindel 4 axial nach vorne in Richtung auf die Bremsscheibe 10 zu bzw. bei einer entgegen gesetzten Drehbewegung der Spindel 4 axial nach hinten bis zum Erreichen eines Anschlags 11 bewegen. Zum Erzeugen einer Klemmkraft beaufschlagt die Spindelmutter 5 die innere Stirnseite des Bremskolbens 6, wodurch der axial verschieblich in der elektromechanischen Bremsvorrichtung 1 gelagerte Bremskolben 6 mit dem Bremsbelag 7 gegen die zugewandte Stirnfläche der Bremsscheibe 10 gedrückt wird.

Die Feststellbremse kann erforderlichenfalls von einer hydraulischen Fahrzeugbremse unterstützt werden, so dass sich die Klemmkraft aus einem elektromotorischen Anteil und einem hydraulischen Anteil zusammensetzt. Bei der hydraulischen Unterstützung wird die dem Bremsmotor zugewandte Rückseite des Bremskolbens 6 mit unter Druck stehendem Hydraulikfluid beaufschlagt.

Der elektrische Bremsmotor 3 ist Teil einer Motor-Getriebe-Einheit 12, zu der auch ein Getriebe 13 gehört, das die Antriebsbewegung des Rotors des Bremsmotors 3 auf die Spindel 4 überträgt. Zum Getriebe 13 gehört ein Antriebsriemen 14 zur Kopplung der Motorwelle 15 des elektrischen Bremsmotors 3 mit einer Getriebeeingangswelle 16. An der Ausgangsseite des Getriebes 13 ist eine Getriebeausgangswelle 17 mit der Spindel 4 verbunden. Das Getriebe 13 ist parallel zum elektrischen Bremsmotor 3 angeordnet und gemeinsam mit diesem in einem Gehäuse 18 der Motor-Getriebe-Einheit 12 aufgenommen. Das Gehäuse 18 ist mit dem Bremssattel 2 verbunden.

In dem Schaubild gemäß Fig. 2 ist der Getriebewirkungsgrad η_{gear} in Abhängigkeit von der Temperatur T dargestellt, die in der Motor-Getriebe-Einheit 12 herrscht. Mit durchgezogener Linie ist der tatsächliche Getriebewirkungsgrad η_{gear} dargestellt, mit gestrichelter Linie der ursprüngliche Getriebewirkungsgrad ohne erfindungsgemäße Optimierung. Der tatsächliche Getriebewirkungsgrad η_{gear} ist als ansteigende Gerade ausgebildet, wohingegen der gestrichelt dargestellte, ursprüngliche Wirkungsgrad, der oberhalb des tatsächlichen Getriebewirkungsgrad η_{gear} verläuft, einen Knick aufweist. Bis zum Erreichen des Knicks steigt der ursprüngliche Wirkungsgrad stärker an und fällt anschließend wieder ab. Der optimierte Wirkungsgrad gemäß der durchgezogenen Linie verläuft zwar auf einem niedrigeren Niveau, man erhält aber einen kontinuierlichen, stetigen Anstieg und es wird vermieden, dass der Getriebewirkungsgrad mit zunehmender Temperatur wieder abfällt.

Aufgrund des stetigen, kontinuierlich verlaufenden Anstiegs des Getriebewirkungsgrades kann ein Abfallen der Motorkonstanten des Bremsmotors und ein Abfallen des Spindelwirkungsgrades mit zunehmender Temperatur kompensiert werden. Auf diese Weise ergibt sich insgesamt über die Wirkkette von elektrischem Bremsmotor, Getriebe und Spindel ein zumindest annähernd konstanter Gesamtwirkungsgrad, aus dem die Klemmkraft der elektromechanischen Bremsvorrichtung auf einfache Weise durch Multiplikation mit dem aktuellen Motorstrom und dem resultierenden Radius der Getriebe/Spindel-Untersetzung ermittelt werden kann.

Der stetige, kontinuierliche Anstieg des Getriebewirkungsgrades gemäß der durchgezogenen Linie in Fig. 2 wird insbesondere durch die Wahl des Antriebsriemens 14 mit einem entsprechenden Materialverhalten erreicht. Der Antriebsriemen besteht beispielsweise aus Polyurethan und weist einen Elastizitätsmodul zwischen 10 N/mm² und 24 N/mm² auf. Insbesondere im negativen Temperaturbereich weist der Antriebsriemen eine erhöhte Steifigkeit auf, so dass mit dem Umlaufen des Antriebsriemens 14 fortlaufend Verformungsarbeit am Antriebsriemen geleistet werden muss, was den Getriebewirkungsgrad η_{gear} in signifikanter Weise absenkt. Hierdurch ergibt sich zwar, wie einem Vergleich der beiden Kennlinien in Fig. 2 zu entnehmen ist, bei tiefen Temperaturen ein schlechterer Getriebewirkungsgrad η_{gear}, jedoch erhält man wie vorbeschrieben eine Getriebewirkungsgradkurve, die in Abhängigkeit der Temperatur als ansteigende Gerade ausgebildet ist. Dieser Verlauf des Getriebewirkungsgrads führt zu der gewünschten Kompensation der mit steigender Temperatur abfallenden Motorkonstanten und des abfallenden Spindelwirkungsgrades.

## Patentansprüche

1. Feststellbremse in einem Fahrzeug, mit einer elektromechanischen Bremsvorrichtung (1) mit einer Motor-Getriebe-Einheit mit einem elektrischen Bremsmotor (3), dessen Antriebsbewegung über ein Getriebe (13) auf einen Bremskolben (6) übertragbar ist, der in Richtung auf eine Bremsscheibe (10) verstellbar ist, **dadurch gekennzeichnet, dass** das Getriebe (13) in der Weise ausgelegt ist, dass der Getriebewirkungsgrad mit zunehmender Temperatur in der Motor-Getriebe-Einheit stetig ansteigt und dadurch einen Getriebewirkungsgrad (η_{gear}) aufweist, der temperaturabhängig stetig ansteigt.

2. Feststellbremse nach Anspruch 1, **dadurch gekennzeichnet, dass** mindestens ein Getriebebauteil des Getriebes (13) bei tieferen Temperaturen eine höhere Steifigkeit aufweist.

3. Feststellbremse nach Anspruch 2, **dadurch gekennzeichnet, dass** das Getriebebauteil ein Antriebsriemen (14) ist.

4. Feststellbremse nach Anspruch 3, **dadurch gekennzeichnet, dass** der Antriebsriemen (14) eine Motorwelle (15) des elektrischen Bremsmotors (3) mit einer Getriebewelle koppelt.

5. Feststellbremse nach Anspruch 2 oder 3, **dadurch gekennzeichnet, dass** der Antriebsriemen (14) einen Elastizitätsmodul zwischen 10 N/mm² und 24 N/mm² aufweist.

6. Feststellbremse nach einem der Ansprüche 2 bis 4, **dadurch gekennzeichnet, dass** der Getriebewirkungsgrad (η_{gear}) über den gesamten Temperatureinsatzbereich stetig ansteigt.

7. Feststellbremse nach einem der Ansprüche 1 bis 6, **dadurch gekennzeichnet, dass** der Getriebewirkungsgrad (η_{gear}) temperaturabhängig linear ansteigt.

8. Feststellbremse nach einem der Ansprüche 1 bis 7, **dadurch gekennzeichnet, dass** der temperaturabhängige Anstieg des Getriebewirkungsgrads (η_{gear}) einen Abfall des Wirkungsgrads des elektrischen Bremsmotors (3) kompensiert.

9. Feststellbremse nach einem der Ansprüche 1 bis 8, **dadurch gekennzeichnet, dass** der Anstieg des Getriebewirkungsgrads (η_{gear}) einen Abfall des Wirkungsgrads einer Spindel (4) kompensiert, die den Bremskolben (6) verstellt.

10. Feststellbremse nach einem der Ansprüche 1 bis 9, **dadurch gekennzeichnet, dass** der über der Temperatur stetige Anstieg des Getriebewirkungsgrads (η_{gear}) über ein entsprechendes Schmieröl unterstützt wird.

## Claims

1. Parking brake in a vehicle, with an electromechanical braking device (1) with a motor-gear unit with an electric brake motor (3), the drive movement of which can be transmitted via a gear mechanism (13) to a brake piston (6) which is displaceable in the direction of a brake disc (10), **characterized in that** the gear mechanism (13) is configured such that the transmission efficiency rises constantly as the temperature in the motor-gear unit rises and thereby has a transmission efficiency (η_{gear}) which rises constantly depending on temperature.

2. Parking brake according to Claim 1, **characterized in that** at least one gear component of the gear mechanism (13) has a higher stiffness at low temperatures.

3. Parking brake according to Claim 2, **characterized in that** the gear component is a drive belt (14).

4. Parking brake according to Claim 3, **characterized in that** the drive belt (14) couples a motor shaft (15) of the electric brake motor (3) to a gear shaft.

5. Parking brake according to Claim 2 or 3, **characterized in that** the drive belt (14) has a modulus of elasticity between 10 N/mm² and 24 N/mm².

6. Parking brake according to any of Claims 2 to 4, **characterized in that** the transmission efficiency (η_{gear}) rises constantly over the entire temperature usage range.

7. Parking brake according to any of Claims 1 to 6, **characterized in that** the transmission efficiency (η_{gear}) rises linearly depending on temperature.

8. Parking brake according to any of Claims 1 to 7, **characterized in that** the temperature-dependent rise in transmission efficiency (η_{gear}) compensates for a fall in efficiency of the electric brake motor (3).

9. Parking brake according to any of Claims 1 to 8, **characterized in that** the rise in transmission efficiency (η_{gear}) compensates for a fall in efficiency of a spindle (4) which displaces the brake piston (6).

10. Parking brake according to any of Claims 1 to 9, **characterized in that** the rise in transmission efficiency (η_{gear}) which is constant over temperature is supported by a corresponding lubricating oil.

## Revendications

1. Frein de stationnement pour un véhicule, avec un dispositif de freinage électromécanique (1) doté d'un ensemble motoréducteur avec un moteur de frein électrique (3), dont le mouvement d'entraînement peut être transmis par une transmission (13) à un piston de frein (6), qui est déplaçable en direction d'un disque de frein (10), **caractérisé en ce que** la transmission (13) est conçue de telle manière que le rendement de transmission augmente de façon continue avec l'augmentation de la température dans l'ensemble motoréducteur, et présente ainsi un rendement de transmission (η_{gear}) qui augmente en continu en fonction de la température.

2. Frein de stationnement selon la revendication 1, **caractérisé en ce qu'**au moins un composant de transmission de la transmission (13) présente une plus grande rigidité à des températures plus basses.

3. Frein de stationnement selon la revendication 2, **caractérisé en ce que** le composant de transmission est une courroie d'entraînement (14).

4. Frein de stationnement selon la revendication 3, **caractérisé en ce que** la courroie d'entraînement (14) couple un arbre de moteur (15) du moteur de frein électrique (3) à un arbre de transmission.

5. Frein de stationnement selon une revendication 2 ou 3, **caractérisé en ce que** la courroie d'entraînement (14) présente un module d'élasticité compris entre 10 N/mm² et 24 N/mm².

6. Frein de stationnement selon l'une quelconque des revendications 2 à 4, **caractérisé en ce que** le rendement de transmission (η_{gear}) augmente de façon continue sur toute la plage de température de l'utilisation.

7. Frein de stationnement selon l'une quelconque des revendications 1 à 6, **caractérisé en ce que** le rendement de transmission (η_{gear}) augmente linéairement en fonction de la température.

8. Frein de stationnement selon l'une quelconque des revendications 1 à 7, **caractérisé en ce que** la hausse du rendement de transmission (η_{gear}) en fonction de la température compense une baisse du rendement du moteur de frein électrique (3).

9. Frein de stationnement selon l'une quelconque des revendications 1 à 8, **caractérisé en ce que** la hausse du rendement de transmission (η_{gear}) compense une baisse du rendement d'une broche (4), qui déplace le piston de frein (6).

10. Frein de stationnement selon l'une quelconque des revendications 1 à 9, **caractérisé en ce que** la hausse permanente du rendement de transmission (η_{gear}) avec la température est assistée au moyen d'une huile de lubrification correspondante.
